# EUROPÄISCHE PATENTSCHRIFT

(11) **EP 0 894 309 B1**
(45) Veröffentlichungstag und Bekanntmachung des Hinweises auf die Patenterteilung: **29.03.2000**
(21) Anmeldenummer: 97922846.7
(22) Anmeldetag: 17.04.1997
(51) Int. Cl.: G06K 7/06

(54) **KARTENLESEVORRICHTUNG**
CARD READER
LECTEUR DE CARTES

(30) Priorität: 19.04.1996 DE 19615658
(43) Veröffentlichungstag der Anmeldung: 03.02.1999
(73) Patentinhaber: SIEMENS AKTIENGESELLSCHAFT, 80333 München (DE)
(72) Erfinder: HOOLHORST, Albert, NL-4527 BE Aardenburg (NL); RYCKAERT, Paul, B-9988 Watervliet (BE)
(86) Internationale Anmeldenummer: DE9700774
(87) Internationale Veröffentlichungsnummer: WO9740467

(56) Entgegenhaltungen:
- EP-A- 0 476 892
- EP-A- 0 520 080
- DE-A- 4 138 342
- US-A- 5 320 552

## Beschreibung

Die Erfindung betrifft eine Kartenlesevorrichtung gemäß dem Oberbegriff des Patentanspruchs 1, d.h. eine Kartenlesevorrichtung zum Entgegennehmen oder Weitergeben von durch eine oder für eine Karte bereitgestellten Informationen, wobei die Kartenlesevorrichtung derart ausgebildet ist, daß sie unter mechanischer und elektrischer Verbindung mit einer Leiterplatte auf diese montierbar ist.

Eine derartige Kartenlesevorrichtung ist beispielsweise aus der EP 0 472 692 B1 bekannt.

Die bekannte Kartenlesevorrichtung ist zum Lesen von sogenannten SIM-Karten bzw. SIM-Modulen vorgesehen. SIM-Module werden derzeit vor allem in Mobiltelefonen zur Teilnehmeridentifizierung eingesetzt; "SIM" ist dabei die Abkürzung für "Subscriber Identity Module". Die SIM-Module ersetzen insbesondere aufgrund ihrer geringen Abmessungen (25 x 15 mm) zunehmend die früher für diesen Zweck verwendeten relativ großen Chipkarten.

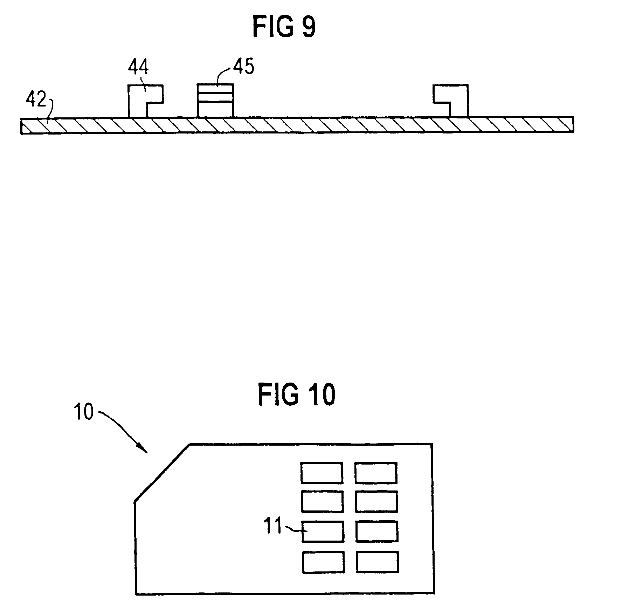

Die Draufsicht auf ein derartiges SIM-Modul ist in Figur 10 gezeigt. Das dort gezeigte SIM-Modul 10 weist an seiner Oberfläche eine Vielzahl (in der Regel 6 oder 8) von in ihrer Lage genau definierten Oberflächenkontakten 11 auf, die, um eine Kommunikation mit dem SIM-Modul zu ermöglichen, durch die Kartenlesevorrichtung mit entsprechenden Anschlüssen einer Leiterplatte, auf welcher auch die Kartenlesevorrichtung selbst montiert ist, zu verbinden sind.

Wenngleich die SIM-Module relativ klein und die dafür vorgesehenen Kartenlesevorrichtungen nicht wesentlich größer sind, beansprucht die Kartenlesevorrichtung gleichwohl verhältnismäßig viel Platz auf der Leiterplatte, auf welcher sie (üblicherweise unter Verwendung eines SMT-Lötverfahrens) montiert ist; die bereitzustellende Leiterplattenfläche ist nicht zuletzt aus diesem Grund relativ groß zu bemessen und schwerlich zu reduzieren. Dies ist aufgrund des ständigen Bestrebens nach einer Miniaturisierung von Gegenständen aller Art, insbesondere bei Mobiltelefonen und dergleichen nachteilig.

Der vorliegenden Erfindung liegt daher die Aufgabe zugrunde, die Kartenlesevorrichtung gemäß dem Oberbegriff des Patentanspruchs 1 derart weiterzubilden, daß der Platz auf der elektrischen Leiterplatte, auf welcher die Kartenlesevorrichtung montiert ist oder zu montieren ist, effektiver nutzbar und die vorzusehende Leiterplattenfläche mithin deutlich reduzierbar ist.

Diese Aufgabe wird erfindungsgemäß durch die im kennzeichnenden Teil des Patentanspruchs 1 beanspruchten Merkmale gelöst.

Demnach ist vorgesehen, daß die zum Herstellen einer mechanischen Verbindung zwischen der Kartenlesevorrichtung und der Leiterplatte vorgesehenen Abschnitte der Kartenlesevorrichtung örtlich getrennt von den elektrisch mit der Leiterplatte in Kontakt zu bringenden Abschnitten der Kartenlesevorrichtung vorgesehen sind.

Die mechanische Verbindung und die elektrische Verbindung zwischen der Kartenlesevorrichtung und der elektrischen Leiterplatte können also völlig unabhängig voneinander realisiert werden, wodurch es unter anderem möglich wird, die elektrische Verbindung zwischen der Kartenlesevorrichtung und der elektrischen Leiterplatte als lötfreie Andruckverbindung, und die mechanische Verbindung zwischen der Kartenlesevorrichtung und der elektrischen Leiterplatte durch ein unmittelbares oder mittelbares Verrasten, Verklemmen oder dergleichen, also ebenfalls lötfrei zu bewerkstelligen.

Dieser mögliche Verzicht auf ein Verlöten von Kartenlesevorrichtung und elektrischer Leiterplatte hat die positive Wirkung, daß die Kartenlesevorrichtung zuletzt, d.h. erst nach Abschluß der Lötarbeiten an der Leiterplatte auf dieselbe (lötfrei) aufgesetzt werden kann, was es wiederum auf einfache Weise, d.h. unter Vorsehen von nur einer minimalen Anzahl von Arbeitsschritten ermöglicht, daß sich die Kartenlesevorrichtung in einem erheblichen Ausmaß in einer zweiten Ebene über die bereits auf der Leiterplatte montierten Bauelemente und Komponenten erstrecken kann, ohne deren Montierbarkeit und Zugänglichkeit auch nur im geringsten zu behindern.

Eine derartige, bislang überhaupt nicht oder allenfalls umständlich und/oder unzuverlässig realisierbare mehrlagige Anordnung von auf einer Leiterplattenseite vorzusehenden Bauelementen und Komponenten eröffnet die Möglichkeit, eine größere Anzahl von Bauelementen oder Komponenten pro Leiterplattenflächeneinheit unterbringen zu können.

Es wurde mithin eine Kartenlesevorrichtung geschaffen, die es auf äußerst einfache und elegante Weise ermöglicht, daß der Platz auf der elektrischen Leiterplatte, auf welcher die Kartenlesevorrichtung montiert ist oder zu montieren ist, effektiver nutzbar und die vorzusehende Leiterplattenfläche mithin deutlich reduzierbar ist.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
Figur 1 eine seitliche Schnittansicht einer eine erfindungsgemäße Kartenlesevorrichtung enthaltenden Anordnung,
Figur 2 eine ebenfalls seitliche, aber nicht geschnittene Ansicht der aus der Anordnung gemäß der Figur 1 herausgenommenen Kartenlesevorrichtung,
Figur 3 eine frontale, d.h. gemäß der Darstellung in der Figur 2 von rechts gesehene Ansicht der dort gezeigten Kartenlesevorrichtung,
Figur 4 eine gemäß der Darstellung in der Figur 1 von oben gesehene Schnittansicht der dort gezeigten Anordnung,
Figur 5 eine Schnittansicht längs einer Linie C-D in Figur 4,
Figur 6 eine der in der Figur 1 gezeigten Ansicht entsprechende Ansicht einer eine Kartenlesevorrichtung gemäß einem zweiten Ausführungsbeispiel enthaltenden Anordnung,
Figur 7 eine der in der Figur 3 gezeigten Ansicht entsprechende Ansicht der aus der Anordnung gemäß der Figur 6 herausgenommenen Kartenlesevorrichtung,
Figur 8 eine der in der Figur 4 gezeigten Ansicht entsprechende Ansicht der in der Figur 6 gezeigten Anordnung,
Figur 9 eine Querschnittsansicht eines Befestigungsmittel zum Befestigen der Kartenlesevorrichtung aufweisenden Abschirmkäfigs, und
Figur 10 eine Draufsicht auf eine SIM-Karte bzw. ein SIM-Modul.

Die im folgenden beschriebene Kartenlesevorrichtung ist zum Entgegennehmen und/oder Weitergeben von durch eine oder für eine SIM-Karte (SIM-Modul) oder dergleichen bereitgestellte Information ausgelegt und geeignet. Sie ist grundsätzlich, d.h. unter entsprechender Anpassung an die veränderten Gegebenheiten jedoch auch für beliebig anders geformte und bemessene und für beliebig andere Arten von Karten verwendbar.

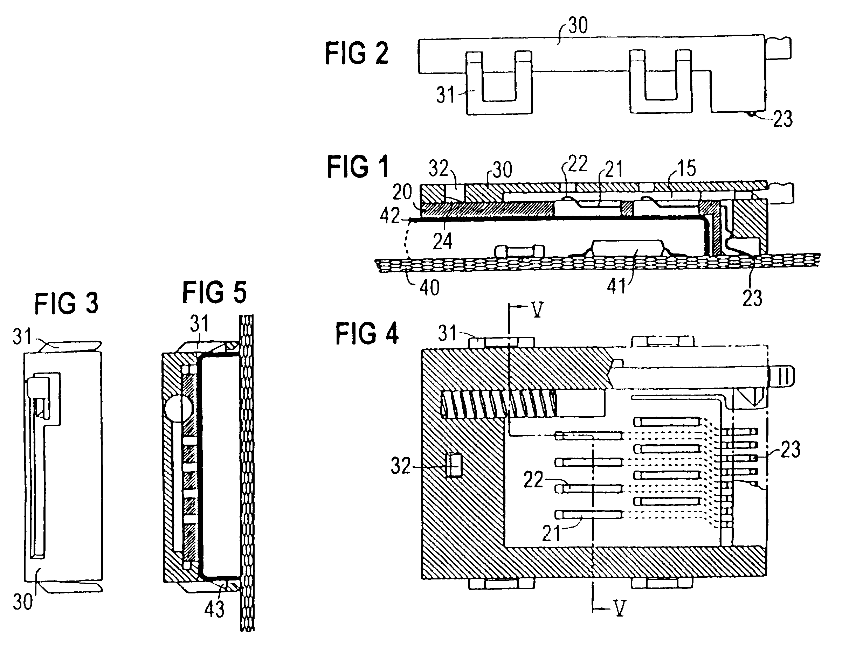

Eine seitliche Schnittansicht einer eine solche Kartenlesevorrichtung enthaltenden Anordnung ist in Figur 1 gezeigt.

Die Kartenlesevorrichtung besteht im vorliegenden Ausführungsbeispiel im wesentlichen aus zwei Bestandteilen, nämlich einem Kontaktträgerteil 20 und einem im zusammengebauten Zustand der Kartenlesevorrichtung darauf aufgesetzten Abdeckteil 30. Zwischen dem Kontaktträgerteil 20 und dem Abdeckteil 30 ist ein Kartenschacht 15 ausgespart, in den das SIM-Modul (gemäß der Darstellung in der Figur 1 von rechts nach links) zum Lesen desselben einschiebbar ist.

Der Aufbau und die Funktion von SIM-Modulen wurden bereits eingangs unter Bezugnahme auf die Figur 10 beschrieben.

Das Kontaktträgerteil 20 weist mehrere Kontaktelemente 21 auf, deren Aufgabe es ist, die Oberflächenkontakte 11 des SIM-Moduls 10 elektrisch mit entsprechenden Anschlüssen einer elektrischen Leiterplatte 40, auf welcher die Kartenlesevorrichtung und andere elektronische, elektrische und elektromechanische Bauelemente 41 montiert bzw. zu montieren sind, zu verbinden.

Diejenigen Enden der Kontaktelemente 21, die die Oberflächenkontakte 11 des SIM-Moduls 10 kontaktieren sollen, sind als Federkuppen 22 ausgebildet und derart positioniert, daß sie im bestimmungsgemäß eingeschobenen Zustand des SIM-Moduls, d.h. in der Lesestellung desselben dessen Oberflächenkontakte 11 durch ein entsprechendes Aneinanderdrücken (lötfreie Andruckverbindung) zuverlässig und sicher kontaktieren können. Die hierzu im einzelnen vorzusehenden Maßnahmen dürften für einen Fachmann auch ohne weitere Erläuterung nachvollziehbar sein.

Die jeweils anderen Enden der Kontaktelemente 21, also diejenigen Abschnitte der Kontaktelemente 21, die die entsprechenden Anschlüsse der Leiterplatte 40 kontaktieren sollen, sind, wie aus der Figur 1 deutlich ersichtlich ist, ebenfalls als Federkuppen 23 ausgebildet, wodurch auch diese Verbindung als eine lötfreie Andruckverbindung realisierbar ist.

Im zusammengebauten Zustand der Kartenlesevorrichtung ist, wie vorstehend bereits erwähnt, über dem Kontaktträgerteil 20 das Abdeckteil 30 angeordnet.

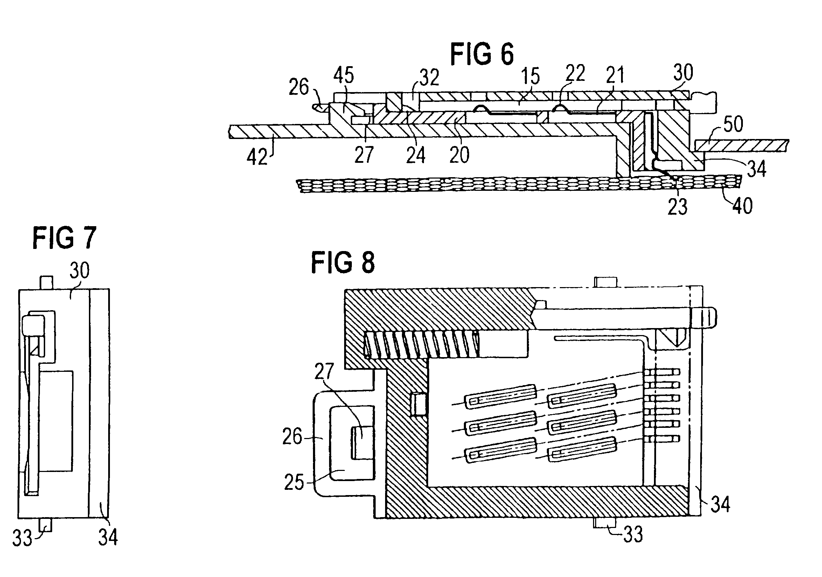

Wie insbesondere aus den Figuren 2 bis 4 ersichtlich ist, von welcher die Figur 2 eine seitliche Ansicht der aus der Anordnung gemäß der Figur 1 herausgenommenen Kartenlesevorrichtung, die Figur 3 eine frontale Ansicht der aus der Anordnung gemäß der Figur 1 herausgenommenen Kartenlesevorrichtung, und die Figur 4 eine gemäß der Darstellung in der Figur 1 von oben gesehene Schnittansicht der dort gezeigten Anordnung zeigen, weist das Abdeckteil 30 mehrere Rastelemente in Form von Rasthebeln 31 auf, die zur Befestigung des Abdeckteils 30 und des Kontaktträgerteils 20 an einer oder in einer die Kartenlesevorrichtung enthaltenden Anordnung, genauer gesagt zur Befestigung an deren Gehäuse, deren Leiterplatte(n), auf der bzw. den Leiterplatte(n) montierten Gegenständen oder sonstigen Komponenten der Anordnung dienen. Wie insbesondere aus Figur 5, welche eine Schnittansicht längs einer Linie C-D in Figur 4 zeigt, ersichtlich ist, erfolgt die Befestigung im betrachteten Ausführungsbeispiel hauptsächlich durch ein Verrasten der Rasthebel 31 mit entsprechenden Gegenstücken in Form von Rastnasen 43 an den Seitenwänden eines HF-Abschirmkäfigs 42 auf der Leiterplatte 40.

Einhergehend mit dem Verrasten des Abdeckteils 30 mit dem Abschirmkäfig 42 wird das Kontaktträgerteil 20 zwischen diesen Elementen eingeklemmt. Das Kontaktträgerteil 20, das Abdeckteil 30 und der Verriegelungsmechanismus 31, 42 sind dabei derart ausgebildet und bemessen, daß das Kontaktträgerteil durch das Ineingriffbringen, d.h. durch die mechanische Verbindung zwischen dem Abdeckteil 30 und dem Abschirmkäfig 42 an einer genau vorbestimmten Stelle ortsfest (unverrückbar) fixiert wird. Die Fixierstellung des Kontaktträgerteils und/oder dessen Gestaltung sind so gewählt, daß die Federkuppen 23 der Kontaktelemente 21 des Kontaktträgerteils 20 in dieser Position des Kontaktträgerteils unter Ausbildung einer Andruckverbindung genau mit den auf der Leiterplatte 40 hierfür vorgesehenen Anschlußstellen (Oberflächenkontakte) in Kontakt kommen.

Durch das Verrasten von Abdeckteil 30 und Abschirmkäfig 42, welcher im übrigen seinerseits wieder mit der Leiterplatte verbunden ist, auf welche die Kartenlesevorrichtung zu montieren bzw. wie beschrieben montiert ist, wird die Kartenlesevorrichtung also sowohl mechanisch als auch elektrisch mit der Leiterplatte verbunden.

Im Gegensatz zu den bisherigen Montageverfahren, d.h. insbesondere im Gegensatz zu einem Verlöten von Kartenlesevorrichtung und Leiterplatte (beispielsweise nach einem SMT-Verfahren) sind die zum Herstellen der mechanischen Verbindung zwischen der Kartenlesevorrichtung und der Leiterplatte vorgesehenen Abschnitte der Kartenlesevorrichtung (die Rastnasen 31) örtlich getrennt von den elektrisch mit der Leiterplatte in Kontakt zu bringenden Abschnitten der Kartenlesevorrichtung (von den Federkuppen 23 der Kontaktelemente 21) vorgesehen.

Diese Trennung von mechanischen und elektrischen Verbindungselementen ermöglicht, wie am beschriebenen Ausführungsbeispiel leicht nachvollziehbar ist, auf ein Löten bei der Montage der Kartenlesevorrichtung auf die Leiterplatte gänzlich zu verzichten.

Damit ist es möglich, die Kartenlesevorrichtung erst nach dem Anlöten aller auf die Leiterplatte 40 anzulötenden Bauteile und Komponenten 41 auf die Leiterplatte unter damit einhergehendem elektrischen und mechanischen Verbinden aufzusetzen.

Bei entsprechender Formgebung der Kartenlesevorrichtung kann sich diese, wie insbesondere aus der Figur 1 ersichtlich ist, zumindest teilweise in einer zweiten (oberen) Ebene über auf der Leiterplatte 40 bereits montierte (beispielsweise verlötete) Bauelemente und Komponenten 41, 42 hinweg erstrecken.

Ein derartiger mehrlagiger Aufbau über einer Leiterplattenseite wäre bei dem bisher praktizierten Verlöten von Kartenlesevorrichtung und Leiterplatte nur umständlich und/oder unzuverlässig möglich. Wollte man nämlich alle auf die Leiterplatte anzulötenden Bauelemente und Komponenten einschließlich der Kartenlesevorrichtung in einem einzigen Arbeitsgang anlöten, wären die unter der Kartenlesevorrichtung anzuordnenden Bauelemente zum Verlöten, insbesondere bei einem Verlöten nach dem heute überwiegend benutzten SMT-Lötverfahren nur sehr schlecht zugänglich, was den Lötprozeß äußerst aufwendig und unzuverlässig gestalten oder gar unmöglich machen würde. Wollte man dagegen die Kartenlesevorrichtung erst am Ende, d.h. nach dem Verlöten der in der unteren Ebene vorgesehenen Bauelemente auf die Leiterplatte auflöten, erforderte dies ein erneutes Durchlaufen der Lötstraße, was erkennbar einen erheblichen Mehraufwand bedeuten würde. Unabhängig von der Art und Weise der Herstellung der fertigen Leiterplatte wären die Wartung und die Reparatur der Leiterplatte, insbesondere die Wartung und die Reparatur der von der Kartenlesevorrichtung verdeckten Bauelemente sehr kompliziert, da dies unter Umständen mit einem den Zugang zu den überdeckten Bauelementen freilegenden Aus löten der Kartenlesevorrichtung verbunden werden müßte.

Die lötfreie Montage der Kartenlesevorrichtung auf die Leiterplatte eröffnet also auf äußerst einfache Weise bisher nicht gekannte Möglichkeiten bei der Leiterplattenminiaturisierung.

Dieser Effekt ist selbstverständlich nicht nur dann erzielbar, wenn die mechanische Verbindung zwischen Kartenlesevorrichtung und Leiterplatte wie vorstehend beschrieben realisiert wird. Es sind vielmehr unzählige Alternativen und/oder Ergänzungen zum beschriebenen Verbindungsmechanismus denkbar.

Eine Ergänzung zu der beschriebenen mechanischen Verbindung kann beispielsweise darin bestehen, daß das Abdeckteil 30 nicht nur mit dem Abschirmkäfig 42, sondern zusätzlich auch mit dem Kontaktträgerteil 20 in Eingriff gebracht wird.

Das Kontaktträgerteil 20 kann hierzu, wie insbesondere aus der Figur 1 ersichtlich ist, an ihrer im zusammengesetzten Zustand dem Abdeckteil 30 zugewandten Fläche einen Federlappen oder eine Rastnase 24 aufweisen, welche bei bestimmungsgemäßem Übereinanderliegen von Kontaktträgerteil 20 und Abdeckteil 30 in einer entsprechenden Rastöffnung 32 des Abdeckteils zu liegen kommt oder dort einrastet. Die Stabilität der mechanischen Verbindung zwischen Kartenlesevorrichtung und Leiterplatte ist auf diese Weise erheblich steigerbar, wobei jedoch erkennbar keine Einschränkung auf die beschriebene Art des Eingriffs bzw. der Verbindung zwischen Kontaktträgerteil 20 und Abdeckteil 30 besteht.

Weitere mögliche Ergänzungen und/oder Alternativen zu dem beschriebenen Verbindungsmechanismus werden nachfolgend anhand eines weiteren Ausführungsbeispiels der erfindungsgemäßen Kartenlesevorrichtung unter Bezugnahme auf die Figuren 6 bis 9 beschrieben, von welchen die Figur 6 eine der in der Figur 1 gezeigten Ansicht entsprechende Ansicht einer eine Kartenlesevorrichtung gemäß einem zweiten Ausführungsbeispiel enthaltenden Anordnung, die Figur 7 eine der in der Figur 3 gezeigten Ansicht entsprechende Ansicht der aus der Anordnung gemäß der Figur 6 herausgenommenen Kartenlesevorrichtung, die Figur 8 eine der in der Figur 4 gezeigten Ansicht entsprechende Ansicht der in der Figur 6 gezeigten Anordnung, und die Figur 9 eine Querschnittsansicht eines Befestigungsmittel zum Befestigen der Kartenlesevorrichtung aufweisenden Abschirmkäfigs zeigen.

Die in den Figuren 6 bis 8 gezeigte Kartenlesevorrichtung besteht wie die Kartenlesevorrichtung gemäß den Figuren 1 bis 5 ebenfalls aus einem Kontaktträgerteil 20 und einem Abdeckteil 30, welche - abgesehen von den Vorkehrungen zur Verbindung mit der Leiterplatte - im wesentlichen dem Kontaktträgerteil und dem Abdeckteil gemäß den Figuren 1 bis 5 entsprechen; gleiche Bezugszeichen bezeichnen gleiche bzw. - sofern keine Identität vorliegt - einander entsprechende Gegenstände.

Bei der Kartenlesevorrichtung gemäß den Figuren 6 bis 8 fehlen die beim ersten Ausführungsbeispiel noch vorhandenen Rasthebel 31 zur Verrastung mit den seitlichen Rastnasen 43 am Abschirmkäfig 42. Statt dessen ist eine Reihe alternativer Befestigungsmittel vorgesehen.

Ein erstes dieser alternativen Befestigungsmittel ist am Kontaktträgerteil 20 vorgesehen und dient der Fixierung desselben am Abschirmkäfig 42; es besteht, wie insbesondere aus der Figur 8 ersichtlich ist, aus einem eine zentrale Rastöffnung 25 aufweisenden Rastrahmen 26 und einem Fortsatz 27.

Das Abdeckteil 30 weist, wie aus den Figuren 6 bis 8 ersichtlich ist, seitliche Führungselemente 33 und einen frontseitigen stufenartigen Fortsatz 34 als alternative Befestigungsmittel auf.

Der genaue Aufbau, die Funktion und die Wirkungsweise dieser Befestigungsmittel werden durch die nun folgende Beschreibung der Montage der Kartenlesevorrichtung auf die Leiterplatte verdeutlicht.

Zunächst werden das Kontaktträgerteil 20 und das Abdeckteil 30 aufeinandergesetzt. Im bestimmungsgemäß aufeinandergesetzten Zustand verrastet die nach wie vor vorhandene Rastnase 24 des Kontaktträgerteils 20 mit der ebenfalls beibehaltenen Rastöffnung 32 des Abdeckteils 30.

In diesem Zustand wird die Kartenlesevorrichtung auf den Abschirmkäfig 42 aufgesetzt und auf diesem unter Führung durch auf dem Abschirmkäfig vorgesehenen Führungs- und Haltemitteln derart verschoben, daß die Kartenlesevorrichtung schließlich mit einem ebenfalls auf dem Abschirmkäfig vorgesehenen Rasthaken in Eingriff kommt.

Die Führungs- und Haltemittel des Abschirmkäfigs 42 sind auf der Oberseite desselben vorgesehen und in Figur 9 im Querschnitt dargestellte Schienen 44, in welchen die seitlichen Führungselemente 33 des Abdeckteils 30 laufen können; der besagte Rasthaken ist in den Figuren mit dem Bezugszeichen 45 bezeichnet.

Nach dem Einführen der seitlichen Führungselemente 33 des Abdeckteils 30 in die Schienen 44 des Abschirmkäfigs 42 wird die Kartenlesevorrichtung, wie teilweise bereits erwähnt, entlang der Oberfläche des Abschirmkäfigs 42 zum Rasthaken 45 hin verschoben. Bei Erreichen des Rasthakens 45 läuft der Rastrahmen 26 des Kontaktträgerteils 20 auf den Rasthaken 45 auf. Bei fortgesetztem Verschieben der Kartenlesevorrichtung gleitet der Rastrahmen 26 unter elastischer Deformierung desselben über den Rasthaken 45 hinweg und rastet schließlich unter Einnahme seiner ursprünglichen Stellung über diesem ein. In diesem Zustand ragt der Rasthaken 45, wie insbesondere aus der Figur 6 ersichtlich ist, durch die Rastöffnung 25 des Rastrahmens 26 hindurch. Ungefähr zu gleichen Zeit schlägt der Fortsatz 27 des Kontaktträgerteils 20 im wesentlichen frontal gegen den Rasthaken 45 an, so daß ein fortgesetztes Verschieben, auch ein Zurückziehen der Kartenlesevorrichtung ohne ein vorheriges manuelles Lösen der Verbindung nicht mehr möglich ist. Die seitlichen Führungselemente 33 des Abdeckteils 30 befinden sich zu diesem Zeitpunkt immer noch innerhalb der Schienen 44 des Abschirmkäfigs 42; die Schienen 44 dienen in diesem Zustand nicht mehr als Führungssondern als Halteelemente. Die Kartenlesevorrichtung hat mit der beschriebenen Verrastung ihre bestimmungsgemäße Stellung auf der Leiterplatte erreicht. Um sie dort zuverlässig ortsfest zu fixieren (unverrückbar zu halten), kann sie, genauer gesagt der stufenartige Fortsatz 34 das Abdeckteils 30 abschließend zwischen einem Klemmelement 50 und der Leiterplatte 40 verklemmt werden.

Die Kartenlesevorrichtung gemäß dem zweiten Ausführungsbeispiel ist damit ebenso wie die Kartenlesevorrichtung gemäß dem ersten Ausführungsbeispiel ausschließlich durch ein Verrasten, Verklemmen und dergleichen, also unter vollständigem Verzicht auf ein Verlöten mechanisch und elektrisch mit der Leiterplatte verbindbar.

Es versteht sich von selbst, daß dieser positive Effekt auch dann erzielbar ist, wenn die bei den beschriebenen Ausführungsbeispielen der Kartenlesevorrichtung verwendeten und darüber hinaus auch andere geeignete, nicht explizit erwähnte Verbindungsmittel zur unmittelbaren oder mittelbaren mechanischen Verbindung der Kartenlesevorrichtung mit der Leiterplatte einzeln oder in beliebigen anderen Kombinationen verwendet werden.

Bei den vorstehend beschriebenen Ausführungsbeispielen spielte jeweils der Abschirmkäfig 42 eine entscheidende Rolle bei der Verbindung von Kartenlesevorrichtung und Leiterplatte. Eine wie in den Figuren gezeigte und beschriebene Anordnung der Kartenlesevorrichtung neben bzw. über einem Abschirmkäfig oder dergleichen ist insofern vorteilhaft, als dieser nicht nur als Befestigungsmittelträger, sondern zugleich auch als Auflage- und Anschlagfläche für die Kartenlesevorrichtung dienen kann.

Gleichwohl besteht jedoch selbstverständlich keinerlei Einschränkung darauf, daß das die Verbindung zwischen Kartenlesevorrichtung und Leiterplatte unter Einbeziehung eine Abschirmkäfigs oder dergleichen bewerkstelligt wird.

Als Verbindungsmittelträger oder Verbindungsmittel selbst kommen je nach den vorliegenden Gegebenheit beliebige andere Gegenstände und Komponenten in Frage, unter anderem beispielsweise also auch das Gehäuse der die Kartenlesevorrichtung beherbergenden Anordnung, andere auf der Leiterplatten vorgesehene Bauelemente oder Komponenten (insbesondere mechanischer und elektromechanischer Art) oder die Leiterplatte selbst.

## Patentansprüche

1. Kartenlesevorrichtung zum Entgegennehmen oder Weitergeben von durch eine oder für eine Karte (10) bereitgestellten Informationen, wobei die Kartenlesevorrichtung derart ausgebildet ist, daß sie unter mechanischer und elektrischer Verbindung mit einer Leiterplatte (40) auf diese montierbar ist, und wobei die zum Herstellen einer mechanischen Verbindung zwischen der Kartenlesevorrichtung und der Leiterplatte vorgesehenen Abschnitte (31; 24, 32; 25, 26, 27, 33, 34) der Kartenlesevorrichtung örtlich getrennt von den elektrisch mit der Leiterplatte in Kontakt zu bringenden Abschnitten (23) der Kartenlesevorrichtung vorgesehen sind,
**dadurch gekennzeichnet,**
daß die Kartenlesevorrichtung derart ausgebildet ist, daß sie sich im auf der Leiterplatte (40) montierten Zustand zumindest teilweise in einer zweiten Ebene über weitere auf der Leiterplatte montierte Elemente (41, 42) erstreckt.

2. Kartenlesevorrichtung nach Anspruch 1,
**dadurch gekennzeichnet,**
daß die Kartenlesevorrichtung ein Kontaktelemente (21, 22, 23) tragendes Kontaktträgerteil (20) und ein Abdeckteil (30) umfaßt.

3. Kartenlesevorrichtung nach Anspruch 2,
**dadurch gekennzeichnet,**
daß die Kontaktelemente (21, 22, 23) Federkuppen (22, 23) aufweisen, die eine lötfreie Andruckverbindung mit zu kontaktierenden Kontaktstellen auf der Karte (10) und auf der Leiterplatte (40) aufweisen.

4. Kartenlesevorrichtung nach Anspruch 2 oder 3,
**dadurch gekennzeichnet,**
daß die Kartenlesevorrichtung derart ausgebildet ist, daß sie durch ein Verrasten oder ein Verklemmen lötfrei mittelbar oder unmittelbar mechanisch mit der Leiterplatte (40) verbindbar ist.

5. Kartenlesevorrichtung nach Anspruch 4,
**dadurch gekennzeichnet,**
daß wenigstens das Kontaktträgerteil (20) oder das Abdeckteil (30) derart ausgebildet sind, das sie an einem auf der Leiterplatte (40) vorgesehenen Abschirmkäfig (42) verrastbar oder verklemmbar sind.

6. Kartenlesevorrichtung nach einem der vorhergehenden Ansprüche,
**dadurch gekennzeichnet,**
daß die Verbindungsmittel der Kartenlesevorrichtung zur mechanischen und zur elektrischen Verbindung der Kartenlesevorrichtung mit der Leiterplatte (40) derart angeordnet und ausgebildet sind, daß die Kartenlesevorrichtung erst nach dem Auflöten von auf die Leiterplatte aufzulötenden Elementen (41, 42) auf die Leiterplatte montierbar ist.

7. Kartenlesevorrichtung nach Anspruch 6,
**dadurch gekennzeichnet,**
daß die Verbindungsmittel der Kartenlesevorrichtung zur mechanischen und zur elektrischen Verbindung der Kartenlesevorrichtung mit der Leiterplatte (40) derart angeordnet und ausgebildet sind, daß sie nach der Montage der Kartenlesevorrichtung auf die Leiterplatte zur Demontage derselben wieder lösbar sind.

## Claims

1. Card reader for receiving or passing on information provided by or for a card (10), the card reader being designed in such a way that it can be mounted onto a printed circuit board (40), at the same time being mechanically and electrically connected to the latter, and the portions (31; 24, 32; 25, 26, 27, 33, 34) of the card reader provided for establishing a mechanical connection between the card reader and the printed circuit board being provided at separate locations from the portions (23) of the card reader to be brought electrically into contact with the printed circuit board, characterized in that the card reader is designed in such a way that, in the state in which it is mounted on the printed circuit board (40), it extends at least partially in a second plane over further elements (41, 42) mounted on the printed circuit board.

2. Card reader according to Claim 1, characterized in that the card reader comprises a contact carrier part (20), carrying contact elements (21, 22, 23), and a covering part (30).

3. Card reader according to Claim 2, characterized in that the contact elements (21, 22, 23) have spring domes (22, 23), which have a solderless press bond with contact points to be contacted on the card (10) and on the printed circuit board (40).

4. Card reader according to Claim 2 or 3, characterized in that the card reader is designed in such a way that it can be mechanically connected to the printed circuit board (40) indirectly or directly in a solderless manner by latching or clamping engagement.

5. Card reader according to Claim 4, characterized in that at least the contact carrier part (20) or the covering part (30) is designed in such a way that it can be latched or clamped on a shielding cage (42) provided on the printed circuit board (40).

6. Card reader according to one of the preceding claims, characterized in that the connecting means of the card reader for the mechanical and electrical connection of the card reader to the printed circuit board (40) are arranged and designed in such a way that the card reader can be mounted onto the printed circuit board only after the soldering on of elements (41, 42) to be soldered onto the printed circuit board.

7. Card reader according to Claim 6, characterized in that the connecting means of the card reader for the mechanical and electrical connection of the card reader to the printed circuit board (40) are arranged and designed in such a way that, after mounting of the card reader onto the printed circuit board, they can be released again for removing the said card reader.

## Revendications

1. Lecteur de cartes pour recevoir ou transmettre des informations mises à disposition par une carte ou pour une carte (10), le lecteur de cartes étant conçu de telle sorte qu'il peut être monté sur une carte à circuits imprimés (40) par assemblage mécanique et raccordement électrique avec cette dernière, les sections (31; 24, 32; 25, 26, 27, 33, 34) du lecteur de cartes prévues pour réaliser l'assemblage mécanique entre le lecteur de cartes et la carte à circuits imprimés étant prévus localement distincts des sections (23) du lecteur de cartes à connecter électriquement avec la carte à circuits imprimés
**caractérisé par le fait**
que le lecteur de cartes est conçu de telle sorte que, dans la position assemblée sur la carte à circuits imprimés (40), il s'étend, au moins partiellement, dans un deuxième plan au dessus d'autres éléments (41, 42) montés sur la carte à circuits imprimés.

2. Lecteur de cartes selon la revendication 1
**caractérisé par le fait**
que le lecteur de cartes comporte une partie support de contacts (20), portant des éléments de contact (21, 22, 23), et un couvercle (30).

3. Lecteur de cartes selon la revendication 2
**caractérisé par le fait**
que les éléments de contact (21, 22, 23) comportent des arceaux élastiques (22, 23) qui assurent une liaison par pression sans soudure avec des points de connexion à contacter sur la carte (10) et sur la carte à circuits imprimés (40).

4. Lecteur de cartes selon les revendications 2 ou 3
**caractérisé par le fait**
que le lecteur de cartes est conçu de telle sorte qu'il puisse être assemblé mécaniquement, directement ou indirectement, avec la carte à circuits imprimés (40) par encliquetage ou par serrage et sans soudure.

5. Lecteur de cartes selon la revendication 4
**caractérisé par le fait**
que au moins la partie support des contacts (20) ou le couvercle (30) sont conçus de telle sorte qu'ils peuvent être encliquetés ou serrés sur une cage de blindage (42) prévue sur la carte à circuits imprimés (40).

6. Lecteur de cartes selon l'une des revendications précédentes
**caractérisé par le fait**
que les moyens d'assemblage du lecteur de cartes pour l'assemblage mécanique et la liaison électrique du lecteur de cartes avec la carte à circuits imprimés (40) sont placés et conçus de telle sorte que le lecteur de cartes peut être monté sur la carte à circuits imprimés seulement après la soudure des éléments (41, 42) qu'il faut souder sur la carte à circuits imprimés.

7. Lecteur de cartes selon la revendication 6
**caractérisé par le fait**
que les moyens d'assemblage du lecteur de cartes pour l'assemblage mécanique et la liaison électrique du lecteur de cartes avec la carte à circuits imprimés (40) sont placés et conçus de telle sorte qu'après le montage du lecteur de cartes sur la carte à circuits imprimés, ils peuvent être désassemblés pour le démontage du lecteur de cartes.
